# EUROPEAN PATENT APPLICATION

(11) **EP 1 988 661 A1**
(43) Date of publication of application: **05.11.2008**
(21) Application number: 07816796.2
(22) Date of filing: 09.11.2007
(51) Int. Cl.: H04L 12/24, H04L 29/06, H04L 29/10

(54) **COMMUNICATION ADAPTER LAYER SYSTEM, METHOD AND DEVICE FOR OBTAINING NETWORK ELEMENT INFORMATION**

(30) Priority: 08.02.2007 CN 200710063756
(71) Applicant: Huawei Technologies Co., Ltd., Shenzhen, Guangdong Province 518129 (CN)
(72) Inventor: YE, Xiang, Guangdong 518129 (CN); ZENG, Chengyong, Guangdong 518129 (CN)
(74) Representative: Hengelhaupt, Jürgen
(86) International application number: PCT/CN2007/003184
(87) International publication number: WO 2008/095369

(57) **Abstract**

A TAL system includes a management unit and an execution unit connected via a distributed bus. A method for acquiring NE information includes: an external service module sends a Get Info request to the execution unit according to the reference of the execution unit, and the execution unit acquires information from an external network element (NE) according to the request and returns the NE information acquired from the external NE to the external service module. With this technical solution, the TAL system is divided into a management unit and an execution unit that are relatively independent connected via a distributed bus. The execution unit can be deployed in a device else than the service module or management unit, thus realizing distributed deployment. The distributed deployment enables easy expansion of the system and realizes NE management across a firewall.

## Description

### Field of the Invention

The present invention relates to network technologies based on the Telecom Management Network (TMN) architecture, and in particular, to a Telecom Adapter Layer (TAL) system, a method and an apparatus for acquiring network element (NE) information.

### Background of the Invention

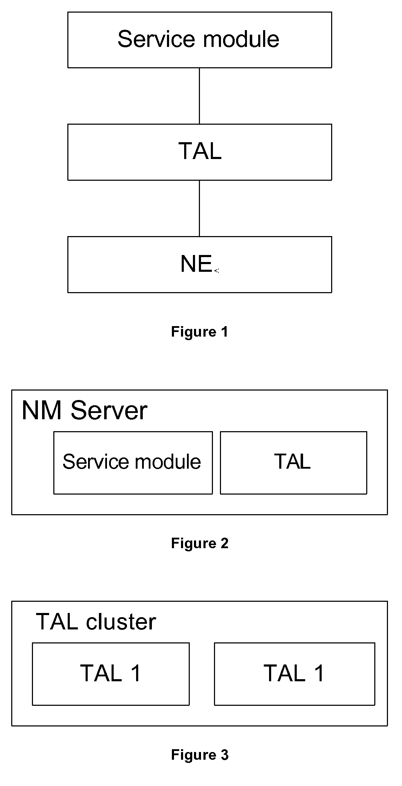

In a TMN where various hardware devices and software systems are deployed, the network management system (NMS) can manage hardware devices and software systems that serve as NEs on a centralized basis. To support certain services, the NMS may need to communicate with the NEs via the TAL to acquire specific information of the NEs. Figure 1 shows the position of TAL in a TMN in the prior art. The service module in the figure may be a performance service module, a fault service module or a topology service module, which acquires information of NEs via the TAL.

In the prior art, the NMS is generally deployed in a centralized way. The usual practice is to deploy the service module and the TAL on a same device. Figure 2 shows a centralized deployment mode in the prior art. In the case that number of NEs accessed by a centralized network management (NM) server reaches the limit, the NM server needs be expanded. Due to the expansion defects of centralized deployment, the only way to enable normal management is to adopt a NM server with more advanced configuration, and export the data from the original NM server. It is apparent that the workload is heavy and the original NM server cannot be reused.

Another defect of centralized deployment is: If the network segment in which a NM server is located is different from the network segment in which NE managed by the NM server is located and a firewall is deployed in the network segment of the NEs, the NM server is unable to access the NEs managed by itself because the NM server cannot acquire the addresses of the NEs. As a result, the NM server cannot manage the NEs behind the firewall.

There is another form of centralized deployment in the prior art, that is, cluster deployment, as shown in Figure 3. In this mode, although the TAL is separated physically, it serves as a centralized TAL device logically to manage NEs. However, the TAL is also unable to access NEs which are managed by the TAL and behind a firewall.

### Summary of the Invention

The embodiments of the present invention provide a TAL system, a method and an apparatus for acquiring NE information to solve the problems along with the centralized deployment of TAL in the prior art.

According to an embodiment of the present invention, a TAL system is provided which includes:
a management unit communicated with an external service module via a distributed bus, adapted to receive the Get Execution Unit request which contains an NE ID from the external service module, acquire a reference of an execution unit corresponding to an NE according to the mapping between NE IDs and execution unit IDs, and return the reference of the execution unit to the external service module;
an execution unit communicated with an external service module and an external NE via distributed buses, adapted to acquire NE information from the external NE according to a Get Info request sent by the external service module according to the reference of the execution unit, and return the NE information acquired from the external NE to the external service module.

A method for acquiring NE information provided in an embodiment of the present invention includes:
by the management unit, querying the execution unit corresponding to an NE according to a Get Execution Unit request sent by an external service module and returning the reference of the execution unit to the external service module;
sending, by the external service module, a Get Info request to the execution unit according to the reference of the execution unit;
acquiring information from the external NE according to the request and returning the NE information acquired from the external NE to the external service module.

A management apparatus provided in an embodiment of the present invention, which is communicated with an external service module via a distributed bus, includes:
a management module, adapted to receive a Get Execution Unit request that contains an NE ID from an external service module, acquire the reference of the execution unit corresponding to an NE based on the mapping between NE IDs and execution unit IDs, and return the reference of the execution unit to the external service module.

An execution apparatus provided in an embodiment of the present invention, which is communicated with an external service module via a distributed bus, includes:
an execution module, adapted to acquire NE information from an external NE according to a Get Info request sent by the external service module according to the reference of an execution unit and return the NE information acquired from the external NE to the external service module.

Based on the preceding technical solution, embodiments of the present invention have the following advantages: a TAL system is divided into a management unit and an execution unit that are relatively independent via a distributed bus, and the execution unit may be deployed in a device else than the service module or management unit, thus realizing distributed deployment; the execution unit can be expanded by deploying multiple execution units on one or more than one device to meet the requirement for expanding the element management system (EMS).

### Brief Description of the Drawings

Figure 1 shows the position of the TAL in a TMN in the prior art;
Figure 2 shows a centralized deployment mode in the prior art;
Figure 3 shows a cluster deployment mode in the prior art;
Figure 4 shows the structure of a TAL system in an embodiment of the present invention;
Figure 5 shows a distributed deployment mode of the TAL system in an embodiment of the present invention;
Figure 6 shows another distributed deployment mode of the TAL system in an embodiment of the present invention;
Figure 7 shows the deployment of a TAL system in one device in an embodiment of the present invention;
Figure 8 shows the deployment of a TAL system across a firewall in an embodiment of the present invention;
Figure 9 shows the structure of a TAL system in an embodiment of the present invention;
Figure 10 shows a procedure for acquiring NE information in an embodiment of the present invention;
Figure 11 shows a procedure for acquiring NE information in a second embodiment of the present invention;
Figure 12 shows a procedure for acquiring NE information in a third embodiment of the present invention;
Figure 13 shows a procedure for acquiring NE information in a fourth embodiment of the present invention;
Figure 14 shows a procedure for acquiring NE information in a fifth embodiment of the present invention; and
Figure 15 shows the signaling flow for a performance module to acquire the CPU usage of a SUN host in an embodiment of the present invention.

### Detailed Description of the Invention

An embodiment of the present invention is to separate the management function from the execution function in the TAL system and enable them to communicate via a distributed bus. Physically, the management unit and the execution unit can be deployed in different devices. Execution units may be added or removed as required, and their positions may be chosen as required.

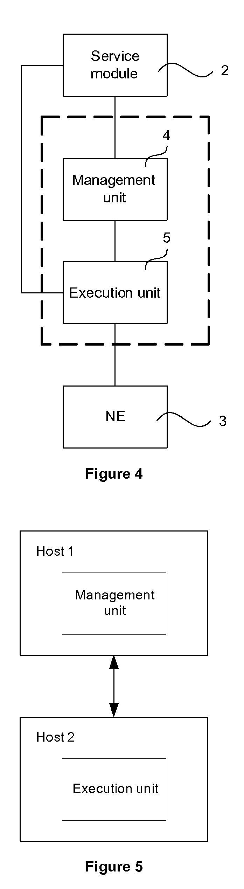

Figure 4 shows the structure of a TAL system provided in an embodiment of the present invention. The TAL system includes a management unit 4 and an execution unit 5. The management unit 4 is communicated with an external service module 2 via a distributed bus. The management unit 4 receives a Get Execution Unit request sent by the external service module 2.

The Get Execution Unit request includes the NE ID corresponding to an external NE 3. The management unit 4 acquires a reference of the execution unit corresponding to the NE 3 by mapping the NE ID in the Get Execution Unit request to an execution unit ID and returns the reference of the execution unit to the external service module 2. The external service module 2 is a functional module that provides management service, for example, performance module, fault module and topology module. The execution unit 5 is communicated with the external service module 2 and the NE 3 via distributed buses. The external service module 2 may send a Get Info request to the execution unit 5 according to the reference of the execution unit, and the execution unit 5 acquires information from the external NE 3 according to the Get Info request and returns the information acquired from the external NE 3 to the external service module 2.

The management unit 4 and the execution unit 5 are relatively independent. The management unit 4 can provide the external service module 2 with the reference of the execution unit 5, and the external service module 2 calls the execution unit 5 to acquire NE information according to the reference. With this inter-independency in real deployment, it is feasible to deploy a management unit in a device at the network and deploy execution units in a distributed way to facilitate the acquisition of NE information. Figure 5 shows a distributed deployment mode of a TAL system in an embodiment of the present invention. In the figure, the execution unit is deployed in host 2 and a management unit in host 1. In host 2, multiple execution units may be deployed, each execution unit manages more than one NE. This can facilitate the expansion of the EMS.

The distributed bus herein refers to a distributed component technology with the object-oriented technology as a main feature. It adopts an object-oriented multi-layer client/server computing model, which organizes all resources distributed on the network (the system layer or the application layer, the traditional application or data) as objects; each object has a clearly defined accessed interface. The application that creates and maintains an object entity is called a server, and the application that accesses an object over the object interface is called a client. An object in the server can not only be accessed but also serve as a client of other objects. A large system built on this structure is in accordance with the development of Internet. The large system is easy to be maintained, expanded and updated (for example, upgrade in the case of 7*24-hour system running) features high availability, openness and scalability. The distributed bus provided in an embodiment of the present invention can adopt Common Object Request Broker Architecture (CORBA), Component Object Model / Distributed Component Object Model (COM/DCOM), JavaBeans/EJB and so on.

CORBA is released by the Object Management Group (OMG). The distributed computer software environment developed in compliance with CORBA specifications can be used in various hardware and software environments. A product complying with CORBA is called an object request broker (ORB), which is a middleware and is responsible for establishing a client and server relationship between objects. Via an ORB, a client can transparently access a interface inside an object on a server, no matter whether the server object is on a same computer or in a network.

The working principle of an ORB is to intercept an Interface Definition Language (IDL) request sent by a client object, find a server object that can respond to the IDL request, send parameters to the server object, activate the method in the server object and finally return the result to the requesting client. Therefore, the client does not need to know the location of the requested object or other information unrelated to the object interface such as the programming language and operating system of the object. Therefore, an ORB provides interoperability between different applications in a heterogeneous distributed environment, thus realizing seamless connection between multiple target systems.

In addition to the CORBA bus, a COM/DCOM bus may also be adopted. The DCOM can enable components based on COM to collaborate between two processes in different computers so that the programmer need not compile network codes to process communication required in interaction between distributed components across a network. In the DCOM, ActiveX components are used as objects. Besides, a distributed bus based on JavaBeans components may also be adopted. JavaBeans relates to a technology of reusing a code component. JavaBeans allows software developers to develop and reuse the code component Bean based on Java.

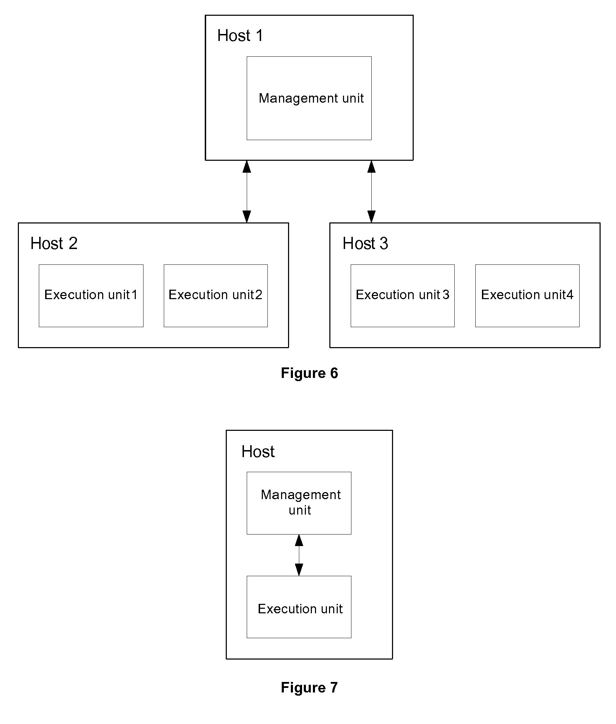

Figure 6 shows a distributed deployment mode of a TAL system in another embodiment of the present invention. In this deployment mode, host 1 where a management unit resides communicates with several hosts where multiple execution units are deployed. It is apparent that this deployment mode can reduce the load on a host as management side and facilitate expansion comparing to the centralized deployment mode. To expand the TAL system according to the present invention, it only needs to register the execution units deployed in hosts in devices that provide naming service so as to establish connections between the execution units with the management unit. Similarly it only needs to deregister the execution unit if an execution unit should be canceled. Although the management unit and execution unit are applicable to distributed deployment in some embodiments of the present invention, they may also be deployed in a same device. Figure 7 shows the deployment of a TAL system in a same device in an embodiment of the present invention.

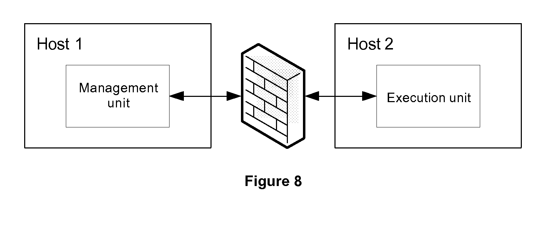

The execution units in the present invention are independent and loosely coupled, relative to the management unit and external service module. This resolves the difficulty in managing NEs across a firewall. Figure 8 shows the deployment of a TAL system across a firewall in an embodiment of the present invention. A firewall is often deployed in an edge device of a local area network (LAN). When a device outside the LAN needs to access NEs in the LAN through the firewall, the device should obtain the mapped addresses of the NEs so as to implement the access and management. For security reasons and the large number of NEs, however, it is impossible for the NMS to acquire the mapped addresses of all NEs. In the present invention, execution units are deployed inside a firewall and are responsible for managing NEs and interacting with the management unit. Therefore, if the IP addresses mapped by the execution unit through Network Address Translation (NAT) or other means are stored in the management unit, access across a firewall can be realized.

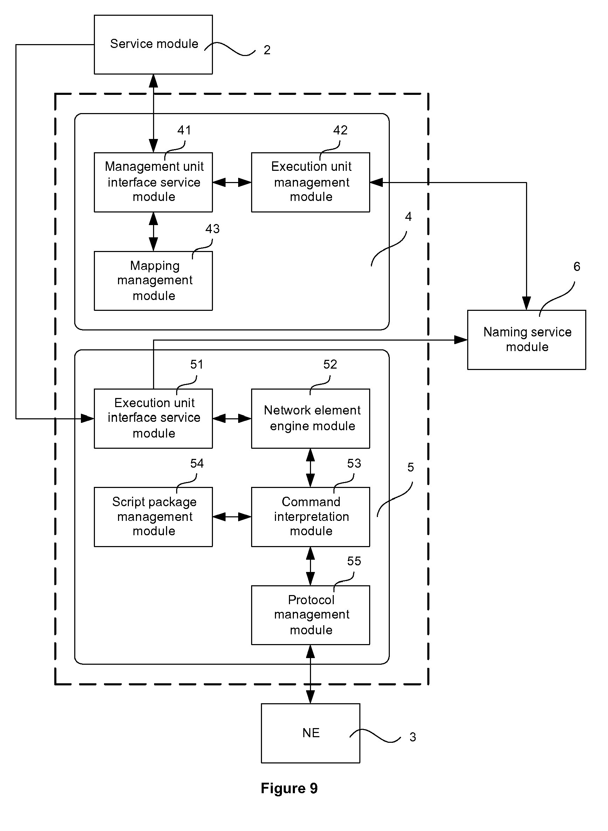

A management unit and an execution unit may be implemented in various modes. The following provides a specific implementation. It should be appreciated that other implementations able to realize the inter-independence of the management unit and the execution unit and realize functions of the management unit and the execution unit are all covered in the protection scope of the invention. Figure 9 shows the structure of a specific implementation of a TAL system in an embodiment of the present invention. The management unit 4 includes a management unit interface service module 41, an execution unit management module 42, and a mapping management module 43. The management unit interface service module 41 is communicated with the external service module 2. The management unit interface service module 41 may receive the Get Execution Unit request sent by the external service module 2 and queries the mapping management module 43 for an execution unit ID of the execution unit 5 corresponding to an NE ID of the NE 3 contained in the Get Execution Unit request to acquire the reference of the execution unit. The mapping management module 43 is communicated with the management unit interface service module 41 and stores the mapping between NE IDs and execution unit IDs. The execution unit management module 42 is communicated with the management unit interface service module 41 and the external naming service module 6. The execution unit management module 42 acquires the reference (similar to a pointer, that is, an access address of an execution unit) of the execution unit 5 from the external naming service module 6 according to the execution unit ID. In this way, the coupling between an execution unit and a service module is weakened.

The execution unit 5 includes: an execution unit interface service module 51, an NE engine module 52, a script package management module 54, a command interpretation module 53 and a protocol management module 55. The execution unit interface service module 51 is communicated with the external service module 2. The execution unit interface service module 51 receives and processes the Get Info request from the external service module 2 over the IDL interface. The NE engine module 52 is communicated with the execution unit interface service module 51. The NE engine module 52 acquires an NE engine entity according to the NE ID in the Get Info request. The command interpretation module 53 is communicated with the NE engine module 52 and the script package management module 54. The command interpretation module 53 establishes a command engine according to the Get Info request forwarded by the NE engine module 52, finds a script package corresponding to the command, queries a corresponding script command according to the mapping between script packages and script commands and executes the script command. The mapping between script packages and script commands is stored in the script package management module 54. The protocol management module 55 is communicated with the command interpretation module 53. The protocol management module 55 converts the format of a script command into the bottom-layer protocol format of the device and sends the script command corresponding to the bottom-layer protocol format to the external NE 3. Upon acquiring the NE information, the protocol management module 55 returns the NE information to the external service module 2 via the command interpretation module 53, the NE engine module 52 and the execution unit interface service module 51.

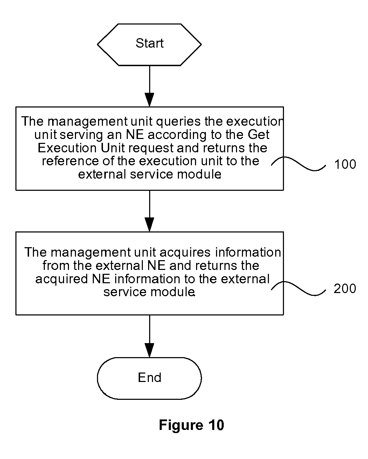

Based on the preceding TAL system, the present invention provides a method for acquiring NE information. Figure 10 shows a procedure for acquiring NE information in a first embodiment of the present invention, including the following.

Step 100: The management unit queries the execution unit corresponding to an NE according to the Get Execution Unit request sent by an external service module and returns the reference of the execution unit to the external service module;

Step 200: The external service module sends a Get Info request to the execution unit according to the reference of the execution unit. The execution unit execute the operation of getting information of the external NE. The execution unit acquires information from the external NE according to the request and returns the NE information acquired from the external NE to the external service module.

As each execution unit corresponds to different NEs, before acquiring the information of an NE, the service module needs to acquire the reference of the execution unit corresponding to the NE and acquire the NE information through the execution unit and acquire the NE information through the execution unit.

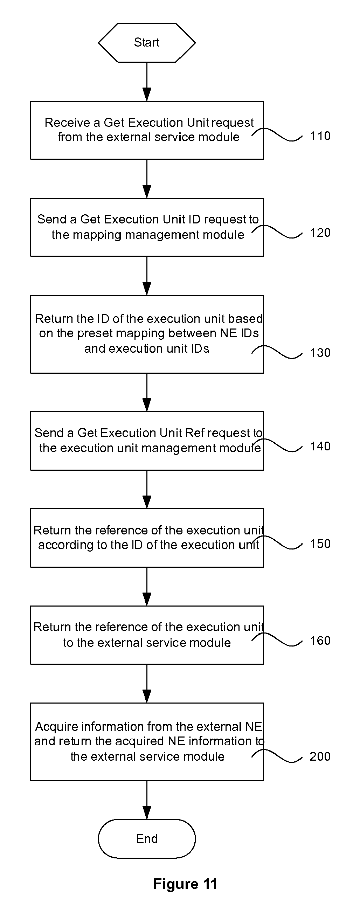

Figure 11 shows a procedure for acquiring NE information in a second embodiment of the present invention. Compared with the preceding embodiment, this invention breaks down Step 100. Specifically, the management unit receives the Get Execution Unit request containing an NE ID from an external service module over the IDL interface; the management unit acquires the execution unit ID according to the preset mapping between NE IDs and execution unit IDs; the management unit acquires the reference of the execution unit according to the execution unit ID and returns the reference to the external service module.

Applied to the preceding TAL system, step 100 includes:
Step 110: The management unit interface service module in the management unit receives the Get Execution Unit request containing an NE ID from the external service module over the IDL interface;
Step 120: The management unit interface service module sends a Get Execution Unit ID request containing the NE ID to the mapping management module;
Step 130: The mapping management module returns the execution unit ID corresponding to the NE to the management unit interface service module based on the preset mapping between NE IDs and execution unit IDs;
Step 140: The management unit interface service module sends a Get Execution Unit Ref request containing the execution unit ID to the execution unit management module;
Step 150: The execution unit management module returns the reference of the execution unit to the management unit interface service module according to the execution unit ID;
Step 160: The management unit interface service module returns the reference of the execution unit corresponding to the NE ID to the external service module.

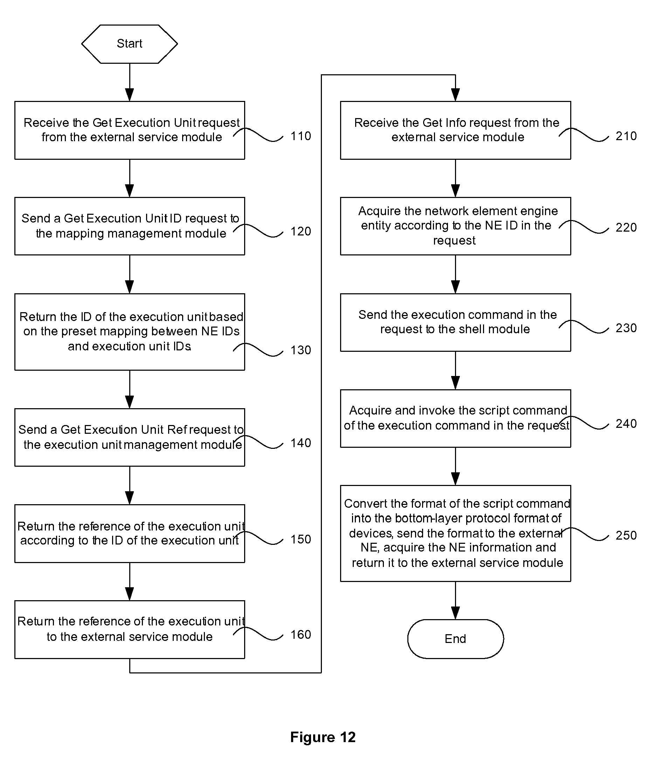

Step 200 described in the second embodiment is fractionalized in a third embodiment of the invention shown in Figure 12. Specifically, the execution unit receives the Get Info request containing the NE ID and an execution command from an external service module over the IDL interface; the execution unit acquires an NE engine entity according to the NE ID in the Get Info request; the execution unit converts the format of the execution command in the Get Info request into the bottom-layer protocol format of the device, sends the execution command corresponding to the bottom-layer protocol format to the external NE, acquires the NE information and returns it to the external service module.

Applied to the preceding TAL system, Step 200 includes:
Step 210: The execution unit receives the Get Info request containing the NE ID and an execution command from the external service module over the IDL interface;
Step 220: The execution unit acquires the NE engine entity according to the NE ID in the Get Info request;
Step 230: The execution unit sends the execution command in the Get Info request to the command interpretation module via the NE engine entity;
Step 240: The command interpretation module acquires and calls a script command corresponding to the execution command in the Get Info request;
Step 250: The command interpretation module calls the protocol management module to convert the format of the script command into the bottom-layer protocol format of the device and sends the script command corresponding to the bottom-layer protocol format to the external NE. The protocol management module acquires the NE information and returns the NE information to the external service module via the command interpretation module, the NE engine module and the execution unit interface service module.

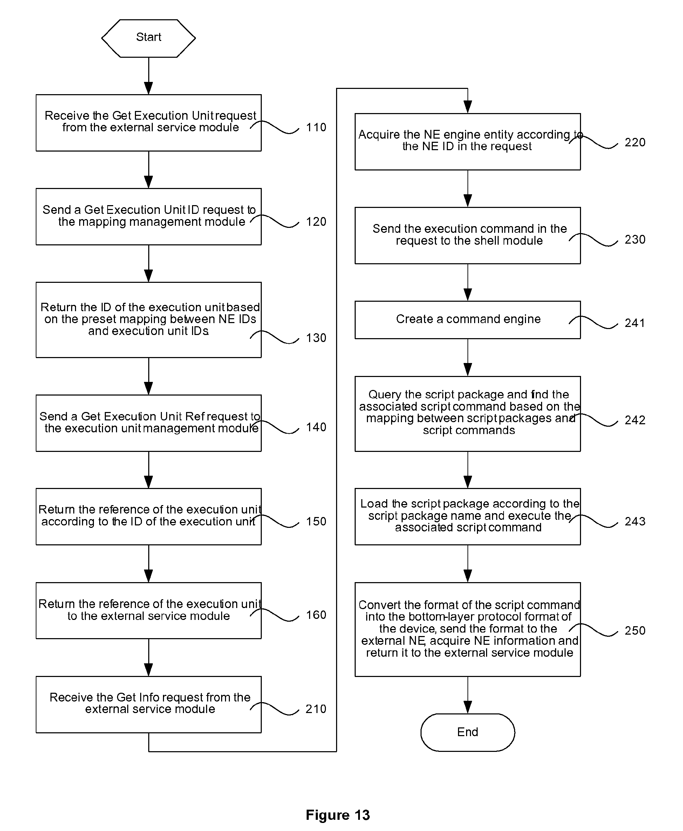

Figure 13 shows the process of the method for acquiring NE information in a fourth embodiment of the present invention. Compared with the preceding embodiment, this embodiment provides a command interpretation mode, including:
Step 241: The command interpretation module creates a command engine;
Step 242: The command interpretation module queries the script package management module for a script package corresponding to the execution command in the Get Info request and finds the an associated script command according to the mapping between script packages and script commands;
Step 243: The command interpretation module loads the script package according to the acquired script package name and executes the script command.

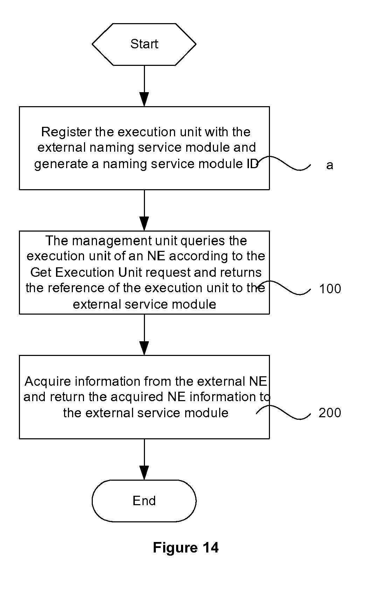

Figure 14 shows a procedure for acquiring NE information in a fifth embodiment of the present invention. Compared with the preceding embodiments, this embodiment adds Step a before Step 100, By the added step, the execution unit is registered with the external naming service module and an associated naming service module ID is generated in the naming service module. This step establishes the mapping between the reference of an execution unit and the execution unit ID.

During registration, the protocol information of the NE such as the IP address and port, as well as the execution unit ID, is entered through topology module. With the execution unit ID entered, the execution unit acquires the protocol information of the NE and sends the protocol information of NE the NE, thus acquiring the topology information of the NE. After the execution unit acquires the NE information, the topology module generates an ID and sends the ID to the mapping management module, thus establishing the mapping between the NE ID and the execution unit ID. In this way, the NE completes registration.

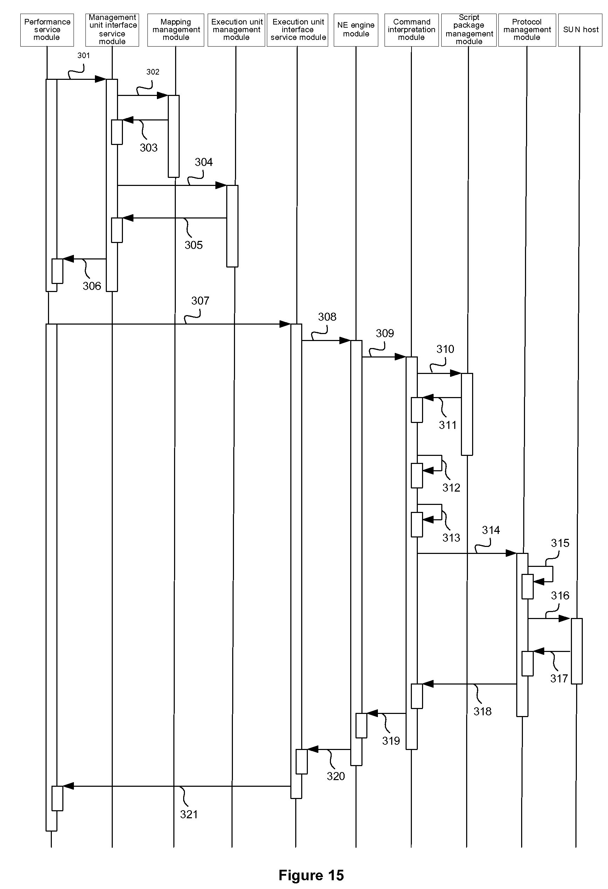

The following describes the procedure with a specific example in which a performance module corresponding to as an external service module acquires the CPU usage information of a SUN host. Figure 15 shows a signaling flow for the performance module to acquire the CPU usage of a SUN host in an embodiment of the present invention.
Step 301: The performance module sends a Get Execution Unit request with the NE ID ".0.123", that is, the NE ID of the SUN host, to the management unit interface service module via an IDL interface;
Step 302: The management unit interface service module sends a Get Execution ID request, to get an execution unit ID mapped with NE ID ".0.123" to the mapping management module;
Step 303: The mapping management module returns the execution unit ID ".1.189" to the management unit interface service module according to the preset mapping between NE IDs and execution unit IDs;
Step 304: The management unit interface service module sends a request, to get a reference of the execution unit whose execution unit ID is ".1.189" to the execution unit management module ;
Step 305: The execution unit management module queries the reference of the execution unit whose execution unit ID is ".1.189" according to the pre-registered information of the execution unit in the naming service module and sends the reference to the management unit interface service module ;
Step 306: The management unit interface service module returns the reference of the execution unit to the performance service module;
Step 307: The performance service module sends a request containing the NE ID ".0.123" and the execution command GetSunCpu to the execution unit interface service module over the IDL interface provided by the execution unit whose ID is ".1.189". The execution command "GetSunCpu" stands for acquiring the CPU usage of the NE ;
Step 308: The execution unit interface service module queries the NE engine instance mapped with the NE ID ".0.123" in the NE engine module;
Step 309: The NE engine module transparently transmits the request to the command interpretation module via the found NE engine instance;
Step 310: The command interpretation module creates a command engine and sends a request for querying the script package mapped with the command GetSunCpu to the script package management module.
Step 311: The script package management module returns the script package SunHostInfo mapped with the command GetSunCpu to the command interpretation module;
Step 312: The command interpretation module calls the command "Package require SunHostInfo" to load the script package SunHost Info;
Step 313: The command interpretation module executes the command GetSunCpu in the script package;
Step 314: The command interpretation module calls the interface snmp::GetExt between the protocol management module and the script package when calling the command GetSunCpu;
Step 315: The protocol management module calls the corresponding bottom-layer command TclSnmpGetExt;
Step 316: The protocol management module sends to the SUN host via the bottom-layer command a Get CPU Usage request, where the CPU usage of the SUN host is packed into a Protocol Data Unit (PDU) and sent to the SUN host;
Step 317: The SUN host returns the CPU usage, for example, 90%, to the protocol management module;
Steps 318-321: The protocol management module returns the CPU usage to the performance service module through other modules in the execution unit.

Based on the preceding procedure, the performance service module acquires the CPU usage of the SUN host so that the performance module can manage the host. The preceding example is used only to describe the idea of the invention. It is not used to limit the invention to a specific implementation.

An embodiment of the present invention provides a management apparatus (management unit), which can be applied in the preceding TAL system. The management apparatus is communicated with external service modules via distributed buses. The management apparatus includes a management module 16, the management module is adapted to receive the Get Execution Unit request containing an NE ID from an external service module, acquire a reference of the execution unit corresponding to an NE according to the mapping between NE IDs and execution unit IDs and return the reference to the external service module.

The management module 16 includes a mapping management module 161, a management unit interface service module 162 and an execution unit management module 163. The mapping management module 161 is adapted to store the mapping between NE IDs and execution unit IDs. The management unit interface service module 162 is communicated with an external service module and the mapping management module. It is adapted to receive the Get Execution Unit request from the external service module, query the ID of execution unit associated to the NE ID in the request to acquire the reference of the execution unit and send the reference of the execution unit returned by the execution unit management module to the external service module. The execution unit management module 163 is communicated with the management unit interface service module and the external naming service module. The execution unit management module is adapted to acquire from the external naming service module the reference of from the execution unit according to the execution unit ID and return the reference to the management unit interface service module.

An embodiment of the present invention also provides an execution apparatus (execution unit), which can be applied in the preceding TAL system. The execution apparatus is communicated with an external service module and an external NE via distributed buses. It includes an execution module 17, adapted to acquire information from the external NE according to the Get Info request sent by the external service module based on the reference of the execution unit and return the information acquired from the external NE to the external service module.

The execution module 17 includes an execution unit interface service module 170, an NE engine module 171, a script package management module 172, a command interpretation module 173 and a protocol management module 174. The execution unit interface service module 170, communicated with the external service module, is adapted to receive and process the Get Info request from the external service module over the IDL interface. The NE engine module 171, communicated with the execution unit interface service module, is adapted to acquire the NE engine entity according to the NE ID in the Get Info request and forward the request to the command interpretation module via the NE engine entity. The script package management module 172 is adapted to store the mapping between script packages and script commands. The command interpretation module 173, communicated with the NE engine module and the script package management module, is adapted to receive the Get Info request forwarded by the NE engine module, create a command engine according to the request, query the script package of the execution command in the request via the command engine, and find the corresponding script command based on the mapping between script packages and script commands. The protocol management module 174, communicated with the command interpretation module, is adapted to convert the format of a script command into the bottom-layer protocol format of the device, send the format to the external NE, acquire the NE information and return the information to the external service module via the command interpretation module, the network engine module and the execution unit interface service module.

In the present invention, a TAL system is divided into inter-independent management units and execution units via distributed buses. The execution unit can be deployed in a device other than the service module or management unit, thus realizing distributed deployment. Furthermore in the invention, the execution unit may be extended so as to deploy multiple execution units in one or more devices to satisfy the requirement of EMS expansion. As an execution unit is independent of the management unit, the execution unit can be deployed in a LAN behind a firewall, and the management unit accesses the mapped-to execution unit through NAT, thus realizing NE management across a firewall.

It is apparent that those skilled in the art can make various modifications and variations to the present invention without departing from the spirit and scope of the present invention. The present invention is intended to cover these modifications and variations provided that they fall in the protected scope defined by the following claims or their equivalents.

## Claims

1. A Telecom Adapter Layer (TAL) system, **characterized in that** comprising:
a management unit communicated with an external service module via a distributed bus, adapted to receive a Get Execution Unit request that contains an NE ID from the external service module, acquire reference of an execution unit serving the NE based on mapping between NE IDs and execution unit IDs, and return the reference of the execution unit to the external service module;
the execution unit, communicated with the external service module and a network element (NE) via distributed buses, adapted to acquire NE information from the NE according to a Get Info request sent by the external service module based on the reference of the execution unit, and return the NE information acquired from the NE to the external service module.

2. The TAL system of claim 1, **characterized in that** wherein the management unit comprises:
a mapping management module, adapted to store the preset mapping between the NE IDs and the execution unit IDs;
a management unit interface service module communicated with the external service module and the mapping management module, adapted to receive the Get Execution Unit request sent by the external service module, query the mapping management module for the execution unit ID mapped with the NE ID in the request to acquire the reference of the execution unit and send the reference of the execution unit returned by the execution unit management module to the external service module;
an execution unit management module communicated with the management unit interface service module and an external naming service module, adapted to acquire the reference of the execution unit from the external naming service module according to the execution unit ID and return the reference to the management unit interface service module.

3. The TAL system of claim 1, **characterized in that** wherein the execution unit comprises:
an execution unit interface service module communicated with the external service module, adapted to receive and process the Get Info request sent by the external service module over an IDL interface;
an NE engine module communicated with the execution unit interface service module, adapted to acquire an NE engine entity according to the NE ID in the Get Info request and forward the Get Info request to a command interpretation module via the NE engine entity;
a script package management module, adapted to store mapping between script packages and script commands;
the command interpretation module communicated with the NE engine module and the script package management module, adapted to receive the Get Info request forwarded by the NE engine module, create a command engine according to the request, query a script package of an execution command and the script command based on the mapping between script packages and script commands and execute the command;
a protocol management module communicated with the command interpretation module, adapted to convert a format of the script command into the bottom-layer protocol format, send the script command corresponding to the bottom-layer protocol format to the NE, acquire the NE information and return the NE information to the external service module via the command interpretation module, the NE engine module and the execution unit interface service module.

4. The TAL system of claim 1, **characterized in that** wherein the management unit and the execution unit are deployed in a same device; or the management unit and the execution unit are deployed in different devices.

5. The TAL system of claim 1, **characterized in that** wherein there are multiple execution units which are deployed in a same device in a centralized way or deployed in different devices.

6. The TAL system of any of claims 1 to 5, **characterized in that** wherein the distributed bus is a CORBA bus.

7. A method for acquiring network element (NE) information, **characterized in that** comprising:
querying, by the management unit, an execution unit corresponding to an NE according to a Get Execution Unit request sent by an external service module and returning reference of the execution unit to the external service module;
sending, by the external service module, a Get Info request to the execution unit according to the reference of the execution unit, and acquiring by the execution unit, NE information from the NE according to the request and returning the NE information acquired from the NE to the external service module.

8. The method of claim 7, **characterized in that** wherein the step of querying comprises:
receiving, by the management unit, the Get Execution Unit request containing an NE ID from the external service module over an IDL interface;
acquiring, by the management unit, an execution unit ID based on preset mapping between NE IDs and execution unit IDs;and
acquiring by the management unit, the reference of the execution unit according to the execution unit ID and returning the reference to the external service module.

9. The method of claim 7,**characterized in that** wherein the step of sending comprises:
receiving, by the execution unit, the Get Info request containing the NE ID and an execution command from the external service module over an IDL interface;
acquiring, by the execution unit, an NE engine entity according to the NE ID in the Get Info request;
converting, by the execution unit, a format of the execution command in the Get Info request into a bottom-layer protocol format;
sending the format to the NE, acquiring the NE information and returning it to the external service module; and
returning the NE information to the external service module.

10. The method of claim 9, **characterized in that** wherein the converting the format of the execution command into the bottom-layer protocol format, comprises:
creating a command engine;
querying a script package of the execution command in the Get Info request and finding a script command based on mapping between script packages and script commands;
loading the script package according to an acquired script package name and converting a format of the script command into the bottom-layer protocol format.

11. The method of claim 8, **characterized in that** wherein, before the management unit queries the execution unit of an NE, the method further comprises:
registering the execution unit with an external naming service module and generating a mapping between the reference of the execution unit and the execution unit ID;
the acquiring, by the management unit, the reference of the execution unit according to the execution unit ID, comprising:
querying, by the management unit, the reference of the execution unit mapped with the execution unit ID based on the mapping between the reference of execution unit and the execution unit ID in the naming service module.

12. A management apparatus, **characterized in that** communicated with an external service module via a distributed bus, comprising:
a management module, adapted to receive a Get Execution Unit request that contains an NE ID from the external service module, acquire reference of an execution unit serving the NE based on a mapping between the NE ID and an execution unit ID and return the reference of the execution unit to the external service module.

13. The apparatus of claim 12, **characterized in that** wherein the management unit comprises:
a mapping management module, adapted to store the preset mapping between NE IDs and execution unit IDs;
a management unit interface service module, which is communicated with the external service module and the mapping management module, adapted to receive the Get Execution Unit request sent by the external service module, query the mapping management module for the execution unit ID corresponding to the NE ID in the request to acquire the reference of the execution unit and send the reference of the execution unit returned by an execution unit management module to the external service module; and
the execution unit management module, which is communicated with the management unit interface service module and an external naming service module, adapted to acquire the reference of the execution unit from the external naming service module according to the execution unit ID and return the reference to the management unit interface service module.

14. An execution apparatus, **characterized in that,** communicated with an external service module and an NE via distributed buses, comprising:
an execution unit, adapted to acquire NE information from the NE according to a Get Info request sent by the external service module based on reference of the execution unit and return the NE information acquired from the NE to the external service module.

15. The apparatus of claim 14, **characterized in that** wherein the execution module comprises:
an execution unit interface service module communicated with the external service module, adapted to receive and process the Get Info request sent by the external service module over an IDL interface;
an NE engine module communicated with the execution unit interface service module, adapted to acquire an NE engine entity according to an NE ID in the Get Info request and forward the request to a command interpretation module via the NE engine entity;
a script package management module, adapted to store mapping between script packages and script commands;
a command interpretation module communicated with the NE engine module and the script package management module, adapted to receive the Get Info request forwarded by the NE engine entity, create a command engine according to the request, query the script package of an execution command via the command engine, find the script command based on the mapping between script packages and script commands and execute the command;
a protocol management module communicated with the command interpretation module, adapted to convert a format of the script command into a bottom-layer protocol format of the device, send the format to the NE, acquire the NE information and return it to the external service module via the command interpretation module, the NE engine module and the execution unit interface service module.
